# EUROPEAN PATENT SPECIFICATION

(11) **EP 2 726 886 B1**
(45) Date of publication and mention of the grant of the patent: **03.06.2015**
(21) Application number: 12751105.3
(22) Date of filing: 29.06.2012
(51) Int. Cl.: G01R 19/25

(54) **METHOD FOR DISTRIBUTED WAVEFORM RECORDING IN A POWER DISTRIBUTION SYSTEM**
VERFAHREN ZUR VERTEILTEN WELLENFORMAUFZEICHNUNG IN EINEM ENERGIEVERTEILUNGSSYSTEM
PROCÉDÉ D'ENREGISTREMENT DE FORME D'ONDE DISTRIBUÉE DANS UN SYSTÈME DE DISTRIBUTION DE PUISSANCE

(30) Priority: 30.06.2011 IN CH22322011
(43) Date of publication of application: 07.05.2014
(73) Proprietor: ABB Research Ltd., 8050 Zürich (CH)
(72) Inventor: GOPALAKRISHNAN, Vivek, Vellore 632007 (IN); KUMAR S.R., Sasi, 637 304 (District) Salem (IN); DECK, Bernhard, 79809 Weilheim (DE)
(74) Representative: Zimmermann & Partner Patentanwälte mbB
(86) International application number: PCT/IB2012/001301
(87) International publication number: WO 2013/001355

(56) References cited:
- US-A- 4 110 684
- US-A1- 2002 145 517
- US-A1- 2008 234 957

## Description

### FIELD OF INVENTION

The invention relates generally to a power distribution system and more specifically to the method and apparatus for distributed waveform recording for the purpose of fault monitoring and analysis of fault condition.

### BACKGROUND

An electrical or power substation involves electricity transmission and distribution systems where voltage is transformed from high to low or the reverse using transformers. Electric power may flow through several substations between generating plant and consumer or load, and may be transformed in voltage in several steps.

The substations generally include a plurality of power and distribution transformers, cabling, switching, reactive power and grounding equipment. These equipment need to be protected against power system anomalies and this objective is accomplished by Intelligent Electronic Devices (IEDs). Currently different types of IEDs are used in a substation for function related to protection, control, monitoring and metering. The IEDs are microprocessor-based equipment that are associated with power distribution system equipment, such as circuit breakers, generators, transformers, power lines, power cables, reactors, motors, capacitor banks etc. Typically, the IEDs receive primary power distribution system information like voltage and current from sensors to perform various protection and monitoring functions. Manual and Automatic control command functions like closing and opening of switching equipment (circuit breakers and disconnectors), or raise/lower voltage levels in order to maintain the desired voltage levels. Common types of IEDs include protective relaying devices, load tap changer controllers, circuit breaker controllers, recloser controllers, voltage regulators, DFRs (Digital Fault Recorders), DSRs (Digital Surge Recorders) and programmable logic controllers (PLCs) etc.

Thus a single unit can perform several protection, metering, monitoring and control functions concurrently.

The IEC61850 standard is an open communication standard from International Electrotechnical Commission (IEC) that advocates interoperability amongst Intelligent Electronic Devices (IEDs) from various manufacturers using common engineering models, data formats and communication protocol. Recent IEDs are therefore designed to support the IEC61850 standard for substation automation, which provides interoperability and advanced communications capabilities like GOOSE (Generic Object Oriented Substation Event) and MMS (Manufacturing Message System) communication profiles.

In the current power distribution systems, the causes for power distribution system reliability aspects, particularly in reference to the fault conditions are analyzed with the help of waveform records stored in Intelligent Electronic Devices (IEDs). Ideally, waveform records are to be stored by IEDs during pre fault and post fault conditions. This means that IEDs should have data storage mechanism, means to continuously monitor the field data and to trigger the waveform storage once the fault is detected. The recorded data represents the condition before and during occurrence of the fault for analyzing the conditions that led to the fault. Hence the waveform recording is a critical part of substation automation system.

The current power distribution systems, however, are not able to perform waveform recording in desired manner due to various limitations. The IEDs that record the waveform data could either be a protection/control IED that performs protection and control related actions as its primary function and recording as secondary function or a dedicated one performing only the waveform recording functionality. When the IED is used for waveform recording, as a secondary function, it normally has a less amount of waveform storage space compared to a dedicated waveform recorder IED. Due to memory limitations, duration of the pre-fault and post-fault records in the waveform may get restricted. Besides that, the protection devices most often operates at lower sampling rates leading to a low resolution waveform recording. This causes limitation in root cause analysis and creates dependency on the dedicated waveform recorder IED which is comparatively a costly solution.

In some power distribution systems, the waveform recording function present in protection IEDs generally sample from 4 to 128 samples/ cycle, the sampling rate is also limited because of input filters providing filtered quantities for main protection and control functions. Dedicated DFRs (with or without process bus input) and standalone DFRs are used for higher sampling rate and they traditionally sample at 64 to 356 samples/ cycle. Thus, the recording device may have limitations on its sampling capabilities. Further, the instrument transformers in substation are hardwired with the DFRs, which are time synchronized with time server at different synchronization resolution. Thus, the fault waveforms recorded by these substation automation devices in distributed manner may result in timing inaccuracies.

There are different conditions that occur within the power distribution system which demand high sampling rates of digitized data for a shorter duration and also there are situations where lower sampling rates of digitized voltage and/or current data are required for a longer duration. It is desirable to have this flexibility in a recording device so that it supports both high sampling rates of digitized voltage and/or current data and has capacity to store these data for a long duration.

With multiple IEDs in the system, the available resource utilization may be improved to support waveform recording at desired sampling rate and for desired time duration instead of using a dedicated DFR which may have a time synchronization problem when it's is hardwired with the instrument transformer and time server for sampled measured value and time data acquisition respectively. This results in deviations in the timing information of disturbance data recorder in distributed devices. With the presence of Merging Unit present in the process bus, the usage of dedicated DFRs is expensive and reduces the availability of the overall system as it contributes to increase in number of automation elements resulting in reduced Mean Time Between Failure (MTBF).

Thus there is a need to have a flexible method for recording waveforms that provides accurate time synchronization and efficient use of the resources in the power distribution system.

Document US 2002/145517 A1 discloses a distributed waveform recording method for event monitoring in a power distribution system. The system comprises a plurality of devices communicatively connected. The devices identify an event and are capable of receiving an external event triggering signal sent by another device. Waveform recording is done based on the event triggering signal created by the device or received from another device.

### BRIEF DESCRIPTION

In one aspect, the invention includes a distributed waveform recording method for fault monitoring in a power distribution system, where the power distribution system includes one or more conventional and/or Electronic Voltage/Current transformers and a plurality of Intelligent Electronic Devices (IEDs) distributed in a plurality of hierarchical levels. The method includes recording different waveforms corresponding to a fault event at different levels in the power distribution system, where each of the waveforms is recorded at a sampling rate corresponding to the level of waveform recording device for the time period based on the waveform recording device, the data for the waveform recording are based on a single sample stream from the synchronized Sampled Measured Value data source, for example Merging Unit and where the different waveforms are synchronized based on a network time synchronization for the power distribution system.

The method is based on generating a waveform trigger by any of the participating/subscribing devices detecting the event and communicatively issuing the waveform trigger to one or more devices in the plurality of hierarchical levels within the power distribution system to participate for waveform recording.

In another aspect, an apparatus engineered for waveform recording based on waveform recording trigger is provided. The apparatus is connectable in any level from the plurality of hierarchical levels within the power distribution system and has a processing module to detect the waveform recording trigger from the data processed by it or from the received communication from any other devices within the plurality of hierarchical level of the power distribution system. The apparatus also have a waveform recording module to perform waveform recording based on the detected waveform recording trigger. The data for waveform recording for the apparatus is sourced from a single stream of sampled measured value data.

In another aspect, a power distribution system includes one or more conventional and/or Electronic Voltage/Current transformers and multiple Intelligent Electronic Devices (IEDs), and further includes a merging unit for enabling a distributed waveform recording for recording different waveforms corresponding to a fault event at different levels in the power distribution system, where each of the waveforms is recorded at a sampling rate based on the level where the recording device is connected. The data for waveform recording and event detection are based on a single sample stream from the Sampled Measured Value data source, for example Merging Unit and where the waveforms are synchronized based on a network time synchronization for the power distribution system.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatic representation of a flowchart showing exemplary steps for a distributed waveform recording method for fault monitoring in the power distribution system, according to one aspect of the invention;
FIG. 2 is a block diagram representation of the power distribution system using a merging unit for distributed waveform recording;
FIG. 3 is one exemplary implementation of the power distribution system of FIG.2 where merging unit is a first level device;
FIG. 4 is another exemplary implementation of the power distribution system of FIG. 2 where the transformer is the first level device; and
FIG. 5 is yet another exemplary implementation of the power distribution system of FIG. 2 where the transformer is the first level device, and the merging unit is the second level device.

### DETAILED DESCRIPTION

Power distribution system automation or automation system or power distribution system network as used herein allows the different equipment and components in the power distribution system to communicate with each other and to receive operator instructions and to provide key alerts, message and signals for managing the power distribution system.

It would be appreciated by those skilled in the art that with the introduction of the communication standard IEC61850, it is possible to collect and log the data in different hierarchical levels of the power distribution system architecture by using communication between IEDs. This invention utilizes this communication ability to trigger fault recording and collection of data associated with fault conditions at multiple hierarchical levels of power distribution system architecture enabling numerous applications such as localized trend analysis, simulated experimental studies (for eg response studies on fault), wide area monitoring and fault analysis resulting in a reliable power network.

Merging unit also referred herein as MU implies an IED providing a digital interface to Electronic Voltage/Current Sensor (eg instrument transformer) that transmits sampled measured values on to Ethernet according to IEC 61850-9-2 and/or IEC 61850-9-2 LE (Light Edition).

Digital input or DI is a hardware input channel in the power distribution system devices/IEDs for power distribution system equipment status monitoring.

GOOSE-Generic object oriented substation events, is a communication protocol according to IEC 61850 for communication between IEDs in the substation.

Digital Fault Recorder (DFR) or event recorder is used in power distribution system to record instantaneous values (waveforms) of current and voltages, digital status of power system equipment for a given period of time. The event recorder may be provided in the power distribution system to record events (digitized) with timestamps. These recorders may be configured to recognize event/fault by suitable communication or provision of suitable signal at the input channel caused by a condition in the system including a trigger by an operator to record events.

First level device(s), as used herein, is a process level device(s) connected to a process bus in the substation automation hierarchy. Example of process level device is a merging unit and electronic instrument transformers (i.e. transformers having digital interface for communication of measured values). The electronic instrument may be connected to a merging unit to provide sampled measured value communication. The first level device deals with high number of samples (i.e., higher number of samples per second). Minimal amount of data processing could be done at this level, for example digital filtering cannot be done.

Second level device, as used herein, is a bay level device connected to a process bus and to a station bus (the level corresponds to a bay level) in the substation automation hierarchy. The second level device deal with a relatively lesser number of samples (i.e., lesser number of samples per second). The second level device, example an IEC 61850 compliant IED, receives a sampled measured value stream from a first level device. Moderate amount of processing could be done on the data for example RMS computation or digital filtering etc can be done.

Other level device is a device used in a level other than the process and bay levels. The other level device can be connected for example to a station bus in the substation automation hierarchy, as used herein is a third level device or a further level of device which can process great amount of data and record data for a very long duration of time.

Waveforms as referred herein refer to waveforms representing any process data relating to the power distribution system including but not limited to voltage and current data.

The method for multi-level waveform recording, also referred herein as a distributed waveform recording method, as described herein makes use of the communication networks and system in distribution system based on IEC 61850 for recording waveforms at different resolutions from different levels of power distribution system, all synchronized based on the power distribution system network time synchronization. Further, the method can be used for recording waveforms for one or more phases as well.

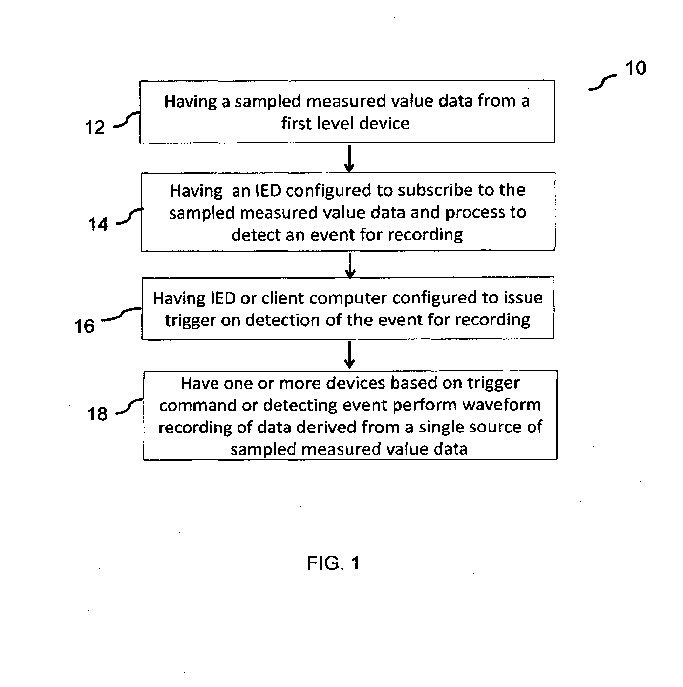

Now turning to drawings, the exemplary method of the invention as explained herein above, is described as a flowchart 10 in FIG. 1 illustrating a distributed waveform recording method for fault monitoring in the power distribution system, where the power distribution system includes one or more transformers and a plurality of Intelligent Electronic Devices (IEDs) distributed in a plurality of hierarchy levels in the power distribution system. The method includes a step 12 for having a first level device (process level device) communicate sampled measured value data. The communicated sampled measured value data are subscribed by one or more IEDs and at least one IED is capable to identify an event for waveform recording (step 14), the at least one IED based on identified event or a client computer from station bus based on operator intervention issues a waveform recording trigger (step 16) for recording different waveforms corresponding to the event (eg fault event) at different levels in the power distribution system. Each of the waveforms is recorded at a different sampling rate from the other depending on the level and the configuration of the device by one or more devices in the power distribution system (step 18) based on the issued waveform trigger. These different waveforms are derived from synchronized sampled measured values based on network time synchronization for the power distribution system by the first level device.

As would be appreciated by those skilled in the art, the method as described herein above would involve initiating a triggering event for recording each of the plurality of waveforms, that is done through a suitable triggering method by any device in the power distribution system that is capable to identify an event (fault) or react to operator intervention i.e. have client computer issue a waveform recording trigger through an operator. The client computer may also be the device that identifies an event through processing of data/information received by it.

As would be appreciated by those skilled in the art, the waveform recording functionality in any IED can be triggered but not limited to the communication (any control command, monitoring status of any binary input) from the peer and/or master devices (MMS or GOOSE or any other communication protocol based trigger), Monitoring Digital Input/ output status/hardwired signals triggered by the peer IED or the process equipment, and Measured values (eg. threshold crossing, dead band crossing).

In one exemplary embodiment, the merging unit sends sample measured value (IEC61850-9-2) message to the subscribing IEDs. The merging unit in this embodiment is the primary source of information for all subscribing IEDs. The subscribing IEDs uses the data for protection and control, revenue metering, waveform recording etc. The merging unit also supports binary inputs and GOOSE which can be used to monitor any status information from the subscribing IEDs. The merging unit receives, for example, the Ethernet frames from the multiple interface units from multiple IEDs at multiple levels in the power distribution system automation hierarchy, and stores these in its buffer so the data can be used for detection of a fault trigger condition or recording when a trigger condition is met. The triggering algorithm is then initiated on the detection of the trigger event by any subscribing IED which initiates the waveform recording function in merging unit or/and one or more IEDs in the power distribution system.

The samples or waveforms are recorded and corresponding data is generated in COMTRADE (COMmon format for Transient Data Exchange for power distribution systems) format as an example file format and stored in the memory for further processing and analysis as necessary.

In this exemplary embodiment the merging unit acts as a first level device that generates the digitized process data and there may be several such merging units distributed across the power distribution system and all are synchronized to each other with a high accuracy (few microseconds). In one exemplary implementation, the first level device (example a process bus devices such as Merging Unit or electronics of transformers referred as Electronic Current/Voltage Transformer (ECT/EVT)) acquires the instrument transformer data at higher sampling rate, for example 256 samples/cycle. The first level device (for example MU) also sends the data as per IEC61850-9-2 (either at the high rate, 256 samples/cycle or low rate, i.e., 80 or 32 samples/cycle) to a second level device (say protection/ control IED) which further processes the data. The second level IED has the choice to send the raw sample data or a processed data (like RMS) to the next level IED using GOOSE/MMS/ slow SV (samples value), possibly through a centralized protection IED / RTU (Remote Terminal Unit)/ a client computer; or to record the waveform by itself. Further, the second level device can store either raw sample data or processed data which is arrived by doing some calculations on the raw sample data.

The recording device for example the IED, runs the triggering algorithm, records the samples and generates the COMTRADE/ other format files that are stored in its memory for further processing and analysis as necessary. Communication profiles such as IEC 61850-9-2, 9-2 LE, slow SV and 61850-8-1 (GOOSE/MMS) are the possible but not limited alternatives to pass the information among various levels of devices. The first and second level devices can perform the coordinated data recording by virtue of communication between them. For example, when the second level device such as protection IEDs detects an abnormality, it can trigger the first level devices such as MU to record the process data, where MU does not run a protection algorithm (including data processing algorithm or event detection algorithm), but captures the process data continuously.

Alternately, in the exemplary method one or more electronic transformers can be used as the first level device and another first level device, merging units may be used for recording the fault waveform, which is based on the sampled measured value from the transformer electronics interface.

In yet another exemplary method, the one or more transformer is used as a first level device, and the merging unit may be used as a another first level device for recording the fault waveform, and further the IEDs in the station bus of substation automation hierarchy, second level devices, also recording the waveforms based on the sampled measured value from electronic transformer, subscribed through Merging Unit, and coordinating the communication between the first and the different level devices in the power distribution system.

It would be appreciated by those skilled in the art that the method may include a further step 16 for generating data corresponding to the different waveforms in a suitable format file for storage and retrieval. The method may also include a step 18 for processing the data for at least one of a localized trend analysis, wide area monitoring and fault analysis. The method may include further steps (not shown) for displaying the data and the analysis results, and communicating the same to external devices.

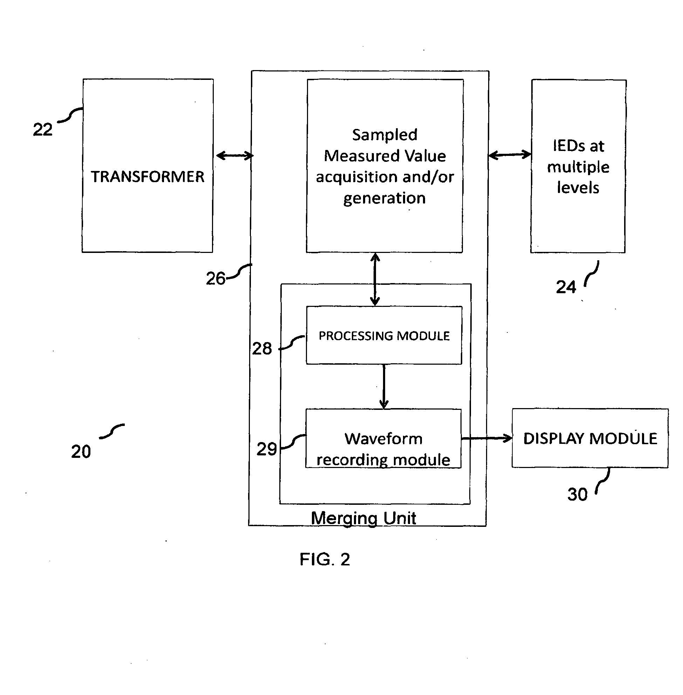

An exemplary implementation of the method in a power distribution system 20 is as shown in FIG. 2 depicting one or more transformers 22, a merging unit 26 and multiple Intelligent Electronic Devices (IEDs) 24 at various levels. The merging unit 26 as described herein is used for distributed waveform recording for recording different waveforms corresponding to a fault event detected by IEDs at different levels in the power distribution system. One or more IEDs 24 may optionally be also involved in waveform recording. Each of the plurality of waveforms is recorded at a different sampling rate from the other based on the level to which it is associated when the recording is carried out. The recording of different waveforms is through synchronized sampled measured value, which is based on network time synchronization for the power distribution system.

The recording device (MU or IED) includes a processing module 28 configured detecting the event for recording (by processing of the data subscribed by it or by recognizing the waveform recording trigger generated by any other device which is capable to communicate with it) and a waveform processing module 29 for waveform recording i.e. generating data corresponding to the plurality of waveforms in a format file for storage and retrieval. The processing module is further configured for processing the data for at least one of a localized trend analysis, wide area monitoring and fault analysis, and these may be displayed by a suitable display device 30 such as its human machine interface (HMI) or a monitor of a computer or a mobile device.

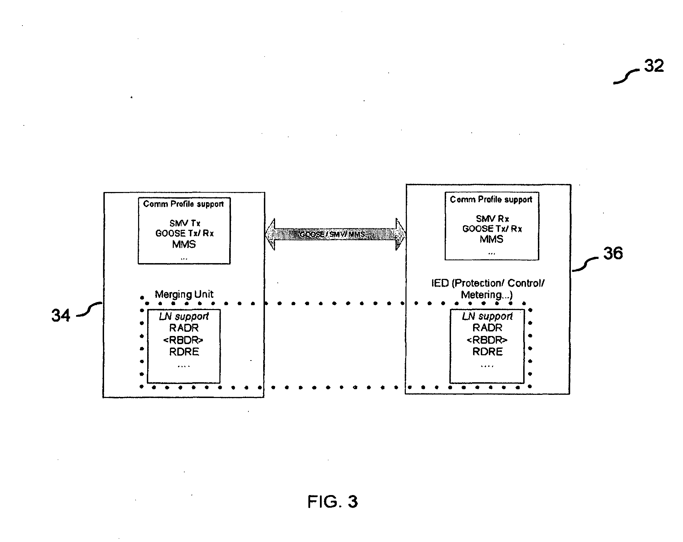

In one specific implementation 32 of the power distribution system described herein, the merging unit 26 is used as a first level device 34 as shown in FIG. 3 for recording the fault event at a higher sampling rate. The IEDs are configured in this implementation as second level devices 36.

In a specific implementation, waveform recording is implemented in a separate hardware module in a modular architecture. In this case, the MU remains as first level device but it will be located in separate hardware with its own communication interfaces such as but not limited to USB or Ethernet. The waveform recorder embodied as merging unit can thus be built as "black box", as in aircraft industries, which comes rugged and bullet proof and contains data as described in IEC 61850 logical nodes responsible for fault wave form communication across devices in the substation/distribution automation hierarchy. Further this waveform recorder shall also listen to all network traffic related to triggering fault waveform recording, which can be useful for further analysis of faults.

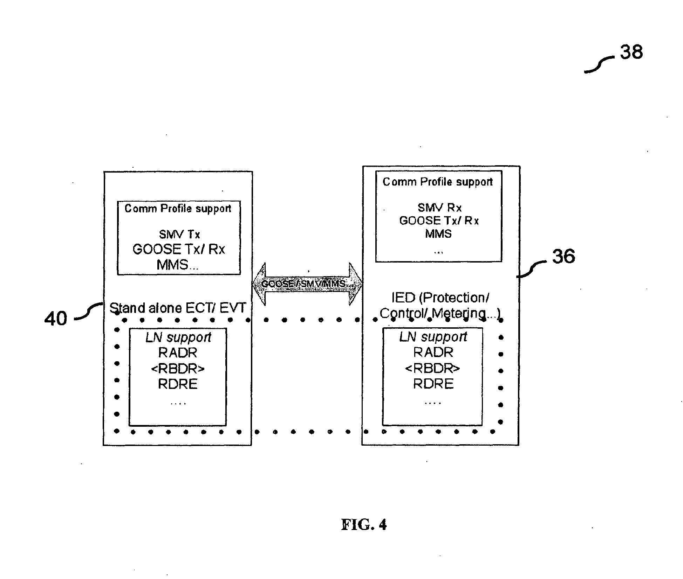

In another specific implementation 38, as shown in FIG. 4, the one or more electronic transformers 22 of the power distribution system are used a first level device 40 for recording the fault event at a higher sampling rate as a first level device and the merging unit is built-in the electronics of the transformers. The IEDs are configured in this implementation as second level devices 36.

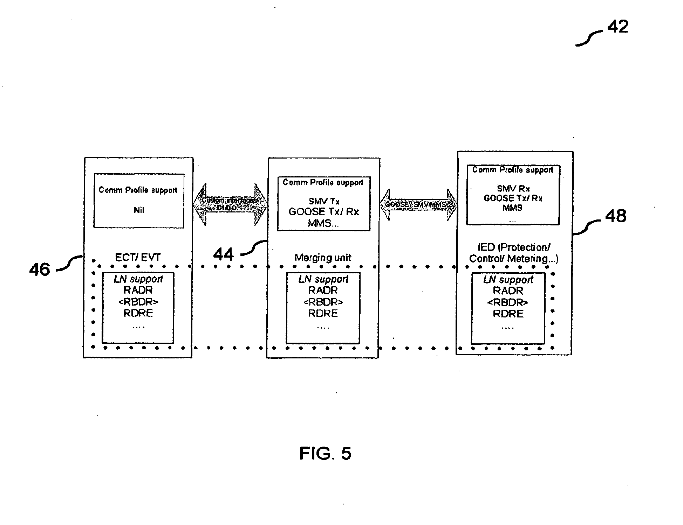

In another specific implementation 42 as shown in FIG. 5, the merging unit is used in this embodiment as an additional first level device 44 for coordinating the communication between the first level device 46 and the different levels 48 in the power distribution system. In other words the merging unit synchronizes incoming sender streams and passes on triggers from the higher level(s) to the sensors/ instrument transformers, and acts as a gateway to retrieve the waveforms or fault disturbance records.

### EXAMPLE:

In one example, the power distribution system architecture for effective fault analysis is based on implementing the waveform recording feature in Merging Unit and IEDs (protection, etc.,) in various levels of the power distribution system automation hierarchy using the same stream of raw data.

Merging unit providing digital interface to instrument transformers acquires sampled measured value data from instrument transformers at higher sampling rate and publishes to the process bus network at the same and/or reduced sampling rate based on methods such as interpolation. In this situation, it is advantageous to record the waveform at different level by different devices such as merging unit, protection and control IEDs, DFRs, etc., based on the incoming sampling rates to these IEDs, which are in turn based on a single stream of sampled measured values from instrument transformers at 80 samples/cycle and records upon an event at the same rate. The merging unit publishes the sampled measured values at 32 samples/cycle rate into process bus. The protection and control IEDs receiving these reduced rate sampled measured values shall record the waveform for relatively longer duration than the merging units. Also the protection and control IED shall trigger any other devices including merging unit (originating the sampled measured values) that makes use of the raw and/or processed sampled measured values to record the waveform upon an event.

In this example, MU provides sample streams for protection / metering (e.g. 80 samples/cycle), containing additional function as fault recording with higher sample rates (e.g 256 samples/cycle), with fault trigger from an secondary device (eg subscribing IED) coming down via GOOSE (or possibly 'slow' SV). The merging unit maintains a circular buffer which contains the information of some predefined number of samples for storing pre fault and/or post fault information. Since the merging unit already contains the waveform information as the first source, it can store the higher sampling rates (for example 256 samples/ cycles) for a shorter duration. The subscribing second level devices receive messages in IEC 61850-9-2 LE format (but not limited to it) in less rate (for example 80 or 32 samples/cycle) or shall down sample the messages (for example 80 samples/ cycle or 32 samples/ cycle etc...), which can be used for fault recording for a longer time period relative to first level device described herein above. The second level device could also be a data collector, recording device or a PC (client computer) which subscribes to incoming messages for example IEC 61850-9-2 LE messages.

As shown in FIG. 3 the merging units or ECT/EVT and bay level IEDs shall act as first and second level recording devices respectively, when ECT/EVT can publish the field data for example voltage/current by itself through SMV (sampled and measured value) messages but not limited to this format alone.

In another example (refer FIG. 5), merging unit can also act as additional first level device if the ECT/EVT acts as the primary waveform storage device. In this example, the MU delivers the triggers from the higher level(s) device to the sensors, and retrieves the data for example disturbance records from ECT/EVT and delivers these to IEDs (higher level devices). In this case, there are multiple possibilities for storing raw sample data and post processed streams of data storage including having all the devices involved in the process store data on sensing an event or on receiving a suitable trigger.

The embodiments described herein effectively use time synchronization with accuracy of less than few microseconds (or better) to arrive at the sequence of events, which happen due to faults. All MUs are synchronized to each other and the IEDs within the substations.

As one can note from the illustrations provided in various embodiments described herein, two or more devices from the first, second or other levels participate together to detect an event for recording and for performing waveform recording. The data for the detection of event and for waveform recording are based from a single stream of sampled measured value data.

Thus, any device may be engineered/configured for waveform recording in the power distribution network based on the method described in the invention such that the resources in the power distribution network is well utilized due to the flexibility from the invention and also ensures the data for waveform recording by one or more devices are time synchronized.

The various embodiments described herein thus achieve both waveform recording and event recording with existing power distribution system infrastructure using data recording at the primary information source. In implementation, it provides a low cost solution enabling applications requiring different data sampling rates enabling raw sample recording, processed data recording at multiple levels, and recording of communication history. When the merging units are incorporated as a separate hardware, as black box functionality is also enabled for the substation automation devices, making the power distribution system more reliable.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A distributed waveform recording method (10) for event monitoring in a power distribution system, wherein the power distribution system comprises a plurality of devices communicatively connected in a plurality of hierarchical levels within the power distribution system;
the plurality of devices comprising a plurality of instrument transformers (22) along with merging units (26) deployed as process level devices connected on a process bus within the plurality of hierarchical levels, a plurality of Intelligent Electronic Devices (IEDs) (24), deployed as bay level devices connected on a station bus and on the process bus within the plurality of hierarchical, and plurality of client computers deployed as station level devices connected on the station bus within the plurality of hierarchical level;
the distributed waveform recording method (10) comprising the steps of:
a) Having at least one process level device communicate sampled measured value data on the process bus (12);
b) having one or more Intelligent Electronic Device (IED) configured from the plurality of IEDs to subscribe to and process the sampled measured value data communicated by the at least one process level device (14) to identify an event;
c) Having at least one IED from the said one or more configured IED based on identification of the event or at least one client computer from the plurality of client computers issued a wave-form recording trigger to one or more device from the plurality of devices in the power distribution system (16);
d) Having the said one or more devices from the plurality of devices in the power distribution system perform waveform recording based on the issued waveform recording trigger (18); and
wherein the data for the waveform recording performed by the said one or more devices is derived from the sampled measured value data communicated by the said at least one process level device.

2. The method of claim 1 wherein the waveform recording performed by the said one or more devices is synchronized based on a network time synchronization in the power distribution system being sourced from a single stream of sampled measured value data.

3. The method of claim 1 wherein the waveform recording performed by at least two devices from the said one or more devices are performed at two different sampling rate or for two different time period.

4. The method of claim 1 wherein the one or more instrument transformer (22) is used as a first level device and the corresponding merging unit (26) is used as an additional first level device for co-ordinating the communication between plurality of devices distributed within plurality of hierarical levels in the power distribution system.

5. The method of claim 1 wherein at least one device from the said plurality of devices in the power distribution system performs waveform recording on detecting the waveform recording trigger based on a control command communication, a Generic Object Oriented Substation Event, GOOSE, communication, a Manufacturing Message System MMS, communication or a change in status of any digital input from the peer or master devices.

6. The method of claim 1 wherein the said one or more device from the said plurality of devices in the power distribution system performs waveform recording for one or more phases of power signal based on the detection of an event in the power distribution system associated with any of the phases of the power signal.

7. An apparatus engineered for waveform recording based on a waveform trigger and communicatively connectable in any level within a plurality of hierarchical levels of a power distribution system having one or more devices communicatively connected in various levels of hierarchical levels within the plurality of hierarchical levels, the apparatus comprising:
a processing module (28) to detect the waveform recording trigger from the data processed by the apparatus or by the one or more devices within the plurality of hierarchical levels of the power distribution system;
a waveform recording module (29) to perform waveform recording based on the detected waveform recording trigger;
wherein the data for waveform recording for the apparatus is sourced from a single stream of sampled measured value data.

8. The apparatus of claim 7 used for at least one of a trend analysis, wide area monitoring, simulated experimental studies and fault analysis.

9. The apparatus of claim 7 optionally comprising a means to display (30) the recorded waveform or analyzed results and a means for communicating the recorded waveform or analyzed results to a device outside of the power distribution system.

10. A power distributed system with a plurality of devices communicatively connected in a plurality of hierarchical levels within the power distribution system; the power distributed system comprising at least two devices from the plurality of devices communicatively connected in the plurality of hierarchical levels within the power distribution system participating in detection of event for waveform recording and performing waveform recording;
wherein, data for detection of event for the waveform recording and for the waveform recording by the said at least two participating devices from the plurality of devices are sourced from a single stream of sampled measured value data.

## Patentansprüche

1. Verteiltes Wellenform-Aufzeichnungsverfahren (10) zur Ereignisüberwachung in einem Energieverteilungssystem, wobei das Energieverteilungssystem mehrere Vorrichtungen umfasst, die in mehreren hierarchischen Ebenen im Energieverteilungssystem kommunikativ verbunden sind;
wobei die mehreren Vorrichtungen mehrere Messwandler (22) zusammen mit Zusammenführungseinheiten (26), die als Prozessebenenvorrichtungen eingesetzt sind, die an einen Prozessbus in den mehreren hierarchischen Ebenen angeschlossen sind, mehrere intelligente elektronische Vorrichtungen (IEDs-Intelligent Electronic Devices) (24), die als Bay-Ebenen-Vorrichtungen eingesetzt sind, die an einen Stations-Bus und den Prozessbus in den mehreren hierarchischen Ebenen angeschlossen sind, und mehrere Client Computer umfasst, die als Stations-Bus-Vorrichtungen eingesetzt sind, die an den Stations-Bus in den mehreren hierarchischen Ebenen angeschlossen sind;
wobei das verteilte Wellenform-Aufzeichnungsverfahren (10) die folgenden Schritte umfasst:
a) mindestens eine Prozessebenenvorrichtung abgetastete Messwertdaten auf dem Prozessbus (12) kommunikativ mitteilen zu lassen;
b) eine oder mehrere intelligente elektronische Vorrichtung/en (IED) von den mehreren IEDs die abgetasteten Messwertdaten, die durch die mindestens eine Prozessebenenvorrichtung (14) kommunikativ mitgeteilt wurden, empfangen und verarbeiten zu lassen, um ein Ereignis zu identifizieren;
c) mindestens eine IED von der einen oder den mehreren konfigurierten IED auf Grundlage einer Identifikation des Ereignisses oder mindestens einen Client Computer von den mehreren Client Computern einen Wellenformaufzeichnungs-auslösesignal an eine oder mehrere Vorrichtung/en der mehreren Vorrichtungen im Energieverteilungssystem (16) ausgeben zu lassen;
d) die eine oder mehrere Vorrichtung/en von den mehreren Vorrichtungen im Energieverteilungssystem eine Wellenformaufzeichnung auf Grundlage des ausgegebenen Wellenformaufzeichnungsauslösesignals (18) durchführen zu lassen; und
wobei die Daten für die Wellenformaufzeichnung, die durch die eine oder mehreren Vorrichtung/en durchgeführt wird, aus den abgetasteten Messwertdaten abgeleitet werden, die durch die mindestens eine Prozessebenenvorrichtung kommunikativ mitgeteilt wurden.

2. Verfahren nach Anspruch 1, wobei die Wellenformaufzeichnung, die durch die eine oder die mehreren Vorrichtung/en durchgeführt wird, auf Grundlage einer Netzwerkzeitsynchronisation im Energieverteilungssystem synchronisiert wird, die aus einem einzelnen Datenstrom von abgetasteten Messwertdaten bezogen wird.

3. Verfahren nach Anspruch 1, wobei die Wellenformaufzeichnung, die durch mindestens zwei der einen oder mehreren Vorrichtung/en durchgeführt wird, mit zwei verschiedenen Abtastraten oder für zwei verschiedene Zeiträume durchgeführt wird.

4. Verfahren nach Anspruch 1, wobei der eine oder die mehreren Messwandler (22) als Erstebenenvorrichtung verwendet wird bzw. werden, und die entsprechende Zusammenführungseinheit (26) als zusätzliche Erstebenenvorrichtung verwendet wird, um die Kommunikation zwischen mehreren Vorrichtungen zu koordinieren, die in mehreren hierarchischen Ebenen im Energieverteilungssystem verteilt sind.

5. Verfahren nach Anspruch 1, wobei mindestens eine Vorrichtung von den mehreren Vorrichtungen im Energieverteilungssystem eine Wellenformaufzeichnung beim Erfassen des Wellenformaufzeichnungsauslösesignals auf Grundlage einer kommunikativen Mitteilung eines Steuerbefehls, einer kommunikativen Mitteilung eines GOOSE-Ereignisses (GOOSE - Generic Object Oriented Substation Event), einer kommunikativen Mitteilung eines Herstellungsnachrichtensystems (MMS - Manufacturing Message System) oder einer Statusveränderung irgendeines digitalen Eingangs von den gleichrangigen oder Master-Vorrichtungen durchführt.

6. Verfahren nach Anspruch 1, wobei die eine oder die mehreren Vorrichtung/en von den mehreren Vorrichtungen im Energieverteilungssystem eine Wellenformaufzeichnung für eine oder mehrere Energiesignalphase/n auf Grundlage der Erfassung eines Ereignisses im Energieverteilungssystem durchführt, das mit einer der Phasen des Energiesignals zusammenhängt.

7. Einrichtung, die zur Wellenformerfassung auf Grundlage eines Wellenformauslösesignals entwickelt und in einer beliebigen Ebene in mehreren hierarchischen Ebenen in einem Energieverteilungssystem mit einer oder mehreren Vorrichtungen kommunikativ verbindbar ist, die in verschiedenen Ebenen von hierarchischen Ebenen in den mehreren hierarchischen Ebenen kommunikativ verbunden ist bzw. sind, wobei die Vorrichtung umfasst:
ein Verarbeitungsmodul (28) zum Erfassen eines Wellenformaufzeichnungsauslösesignals aus den Daten, die durch die Einrichtung oder durch die eine oder die mehreren Vorrichtungen in den mehreren hierarchischen Ebenen des Energieverteilungssystems verarbeitet wurden;
ein Wellenformaufzeichnungsmodul (29) zum Durchführen einer Wellenformaufzeichnung auf Grundlage des erfassten Wellenformaufzeichnungsauslösesignals;
wobei die Daten zur Wellenformaufzeichnung für die Einrichtung aus einem einzelnen Datenstrom abgetasteter Messwertdaten bezogen werden.

8. Einrichtung nach Anspruch 7, die zur Trendanalyse, großräumigen Überwachung, zu simulierten experimentellen Studien und/oder zur Fehleranalyse verwendet wird.

9. Einrichtung nach Anspruch 7, optional ein Mittel zum Anzeigen (30) der aufgezeichneten Wellenform oder von Analyseergebnissen und ein Mittel zum kommunikativen Mitteilen der aufgezeichneten Wellenform oder Analyseergebnisse an eine Vorrichtung außerhalb des Energieverteilungssystems umfassend.

10. Energieverteilungssystem mit mehreren Vorrichtungen, die in mehreren hierarchischen Ebenen im Energieverteilungssystem kommunikativ verbunden sind; wobei das Energieverteilungssystem mindestens zwei Vorrichtungen von den mehreren Vorrichtungen, die in mehreren hierarchischen Ebenen im Energieverteilungssystem kommunikativ verbunden sind, umfasst, die an einer Ereigniserfassung zur Wellenformaufzeichnung beteiligt sind und eine Wellenformaufzeichnung durchführen;
wobei Daten zur Erfassung eines Ereignisses zur Wellenformaufzeichnung und zur Wellenformaufzeichnung durch die mindestens zwei beteiligten Vorrichtungen von den mehreren Vorrichtungen aus einem einzelnen Datenstrom abgetasteter Messwertdaten bezogen werden.

## Revendications

1. Procédé d'enregistrement distribué de forme d'onde (10) pour la surveillance d'événement dans un système de distribution de puissance, sachant que le système de distribution de puissance comprend une pluralité de dispositifs connectés sur le plan de la communication dans une pluralité de niveaux hiérarchiques au sein du système de distribution de puissance ;
la pluralité de dispositifs comprenant une pluralité de transformateurs d'instrument (22) accompagnés d'unités de convergence (26) mis en oeuvre comme dispositifs de niveau de processus connectés sur un bus de processus au sein de la pluralité de niveaux hiérarchiques, une pluralité de dispositifs électroniques intelligents (IED - Intelligent Electronic Devices) (24), mis en oeuvre comme dispositifs de niveau de baie connectés sur un bus de station et sur le bus de processus au sein de la pluralité de niveaux hiérarchiques, et une pluralité d'ordinateurs clients mis en oeuvre comme dispositifs de bus de station connectés sur le bus de station au sein de la pluralité de niveaux hiérarchiques ;
le procédé d'enregistrement distribué de forme d'onde (10) comprenant les étapes consistant à :
a) faire en sorte qu'au moins un dispositif de niveau de processus communique des données de valeurs mesurées échantillonnées sur le bus de processus (12) ;
b) faire en sorte qu'un ou plusieurs dispositifs électroniques intelligents (IED) configurés parmi la pluralité d'IED reçoivent et traitent les données de valeurs mesurées échantillonnées communiquées par l'au moins un dispositif de niveau de processus (14) afin d'identifier un événement ;
c) faire en sorte qu'au moins un IED parmi ledit un ou lesdits plusieurs IED configurés sur la base de l'identification de l'événement ou au moins un ordinateur client parmi la pluralité d'ordinateurs clients émette un signal déclencheur d'enregistrement de forme d'onde à l'attention d'un ou de plusieurs dispositifs parmi la pluralité de dispositifs dans le système de distribution de puissance (16) ;
d) faire en sorte que ledit un ou lesdits plusieurs dispositifs parmi la pluralité de dispositifs dans le système de distribution de puissance effectuent un enregistrement de forme d'onde sur la base du signal déclencheur d'enregistrement de forme de d'onde (18) émis ; et
sachant que les données pour l'enregistrement de forme d'onde effectué par ledit un ou lesdits plusieurs dispositifs sont dérivées des données de valeurs mesurées échantillonnées communiquées par ledit au moins un dispositif de niveau de processus.

2. Le procédé de la revendication 1, dans lequel l'enregistrement de forme d'onde effectué par ledit un ou lesdits plusieurs dispositifs est synchronisé sur la base d'une synchronisation de temps de réseau dans le système de distribution de puissance provenant d'un seul flux de données de valeurs mesurées échantillonnées.

3. Le procédé de la revendication 1, dans lequel l'enregistrement de forme d'onde effectué par au moins deux dispositifs parmi ledit un ou lesdits plusieurs dispositifs est effectué à deux taux d'échantillonnage différents ou pour deux périodes de temps différentes.

4. Le procédé de la revendication 1, dans lequel l'un ou les plusieurs transformateurs d'instrument (22) est / sont utilisé /s comme dispositif de premier niveau et l'unité de convergence (26) correspondante est utilisée comme dispositif de premier niveau supplémentaire pour coordonner la communication entre la pluralité de dispositifs distribués au sein de la pluralité de niveaux hiérarchiques dans le système de distribution de puissance.

5. Le procédé de la revendication 1, dans lequel au moins un dispositif parmi ladite pluralité de dispositifs dans le système de distribution de puissance effectue un enregistrement de forme d'onde lors de la détection du signal déclencheur d'enregistrement de forme d'onde sur la base d'une communication d'instruction de commande, d'une communication d'un événement GOOSE (GOOSE - Generic Object Oriented Substation Event), d'une communication de système de message de fabrication (MMS - Manufacturing Message System) ou d'un changement d'état d'une quelconque entrée numérique provenant des dispositifs homologues ou maîtres.

6. Le procédé de la revendication 1, dans lequel ledit un ou lesdits plusieurs dispositifs parmi ladite pluralité de dispositifs dans le système de distribution de puissance effectue un enregistrement de forme d'onde pour une ou plusieurs phases de signal de puissance sur la base de la détection d'un événement dans le système de distribution de puissance associé à l'une quelconque des phases du signal de puissance.

7. Appareil conçu pour l'enregistrement de forme d'onde sur la base d'un signal déclencheur de forme d'onde et apte à être connecté sur le plan de la communication dans un quelconque niveau au sein d'une pluralité de niveaux hiérarchiques d'un système de distribution de puissance comportant un ou plusieurs dispositifs connectés sur le plan de la communication dans divers niveaux de niveaux hiérarchiques au sein de la pluralité de niveaux hiérarchiques, l'appareil comprenant :
un module de traitement (28) pour détecter un signal déclencheur d'enregistrement de forme d'onde à partir des données traitées par l'appareil ou par l'un ou les plusieurs dispositifs au sein de la pluralité de niveaux hiérarchiques du système de distribution de puissance ;
un module d'enregistrement de forme d'onde (29) pour effectuer un enregistrement de forme d'onde sur la base du signal déclencheur d'enregistrement de forme d'onde détecté ;
sachant que les données pour l'enregistrement de forme d'onde pour l'appareil proviennent d'un seul flux de données de valeurs mesurées échantillonnées.

8. L'appareil de la revendication 7, utilisé pour au moins l'un d'une analyse de tendance, d'une surveillance de zone étendue, d'études expérimentales simulées et d'une analyse de défaut.

9. L'appareil de la revendication 7, comprenant facultativement un moyen pour afficher (30) la forme d'onde enregistrée ou des résultats analysés et un moyen pour communiquer la forme d'onde enregistrée ou des résultats analysés à un dispositif situé en dehors du système de distribution de puissance.

10. Système distribué de puissance comprenant une pluralité de dispositifs connectés sur le plan de la communication dans une pluralité de niveaux hiérarchiques au sein du système de distribution de puissance ; le système distribué de puissance comprenant au moins deux dispositifs parmi la pluralité de dispositifs connectés sur le plan de la communication dans la pluralité de niveaux hiérarchiques au sein du système de distribution de puissance participant à la détection d'événement pour l'enregistrement de forme d'onde et effectuant l'enregistrement de forme d'onde ;
sachant que des données pour la détection d'événement pour l'enregistrement de forme d'onde et pour l'enregistrement de forme d'onde par lesdits au moins deux dispositifs participant parmi la pluralité de dispositifs proviennent d'un seul flux de données de valeurs mesurées échantillonnées.
